(19) Europäisches Patentamt / European Patent Office / Office européen des brevets

(11) EP 4 156 346 A1

(12) **EUROPEAN PATENT APPLICATION**
published in accordance with Art. 153(4) EPC

(43) Date of publication:
**29.03.2023 Bulletin 2023/13**

(21) Application number: **21829102.9**

(22) Date of filing: **02.06.2021**

(51) International Patent Classification (IPC):
***H01M 8/02*** $^{(2006.01)}$ ***H01M 8/04*** $^{(2006.01)}$
***H01M 8/18*** $^{(2006.01)}$

(52) Cooperative Patent Classification (CPC):
**H01M 8/02; H01M 8/04; H01M 8/18;** Y02E 60/50

(86) International application number:
**PCT/JP2021/020990**

(87) International publication number:
**WO 2021/261187 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2020 JP 2020108615**

(71) Applicants:
- **Mitsubishi Heavy Industries, Ltd.**
  **Tokyo 100-8332 (JP)**
- **Nagoya Denki Educational Foundation**
  **Aichi 464-8540 (JP)**

(72) Inventors:
- **HIRAYAMA, Koichiro**
  **Tokyo 100-8332 (JP)**
- **KIYABU, Toshiyasu**
  **Tokyo 100-8332 (JP)**
- **MORITA, Yasushi**
  **Toyota-shi, Aichi 470-0392 (JP)**
- **MURATA, Tsuyoshi**
  **Toyota-shi, Aichi 470-0392 (JP)**
- **ITO, Aya**
  **Toyota-shi, Aichi 470-0392 (JP)**

(74) Representative: **Studio Torta S.p.A.**
**Via Viotti, 9**
**10121 Torino (IT)**

# (54) REDOX FLOW BATTERY

(57) A redox flow battery includes: a cell having a first chamber and a second chamber separated by a membrane; a first tank for storing a first electrolytic solution; a first circulation device for circulating the first electrolytic solution between the first chamber and the first tank; a second tank for storing a second electrolytic solution; and a second circulation device for circulating the second electrolytic solution between the second chamber and the second tank. Each of the first electrolytic solution and the second electrolytic solution contains an active material, and at least one of the active material contained in the first electrolytic solution or the active material contained in the second electrolytic solution is a quinone multimer in which a plurality of quinones are connected via an alkyl chain or a hydroquinone multimer in which a plurality of hydroquinones are connected an alkyl chain.

FIG. 1

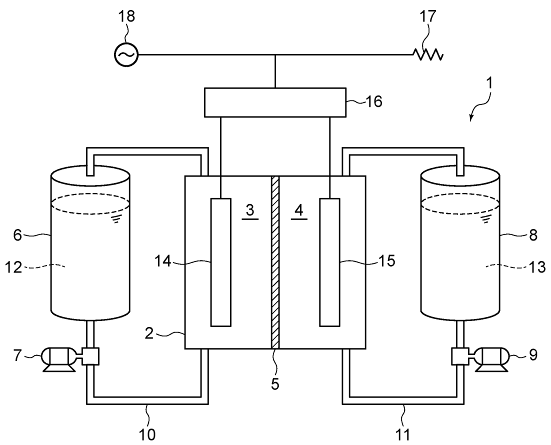


EP 4 156 346 A1

## Description

TECHNICAL FIELD

The present disclosure relates to a redox flow battery.

The present application claims priority based on Japanese Patent Application No. 2020-108615 filed on June 24, 2020, the entire content of which is incorporated herein by reference.

BACKGROUND ART

A redox flow battery is a technology provided by the National Aeronautics and Space Administration (NASA) in 1974, and consists of a cell and a tank for storing an electrolytic solution, in which charging and discharging are performed by circulating the electrolytic solution between the cell and the tank by means of a pump. The redox flow battery is suitable for storing a large amount of electricity because the electricity storage amount can be freely designed according to the tank capacity, and it is expected to be applied to leveling the demand for electricity, including natural energy.

In the current mainstream of the redox flow battery, vanadium is used as an active material of the electrolytic solution. However, due to the recent rise in the price of vanadium, the redox flow battery has not been widely used. For this reason, research aimed at replacing vanadium has been conducted worldwide, and in recent years, a redox flow battery in which an organic material or a metal complex is used as the active material has been reported.

For example, Patent Document 1 discloses a redox flow battery in which quinone/hydroquinone is used as active materials, and charging and discharging are performed by redox reactions between them. Further, for example, Non-Patent Document 1 discloses a redox flow battery in which potassium ferrocyanide is used as a positive electrode active material, and 2,5-dihydroxybenzoquinone (2,5-DHBQ) is used as a negative electrode active material.

Citation List

Patent Literature

Patent Document 1: JP2015-534708A (translation of a PCT application)

Non-Patent Literature

Non-Patent Document 1: Z. Yang et al., "Alkaline Benzoquinone Aqueous Flow Battery for Large-Scale Storage of Electrical Energy", Advanced. Energy Materials, 2017

SUMMARY

Problems to be Solved

Generally, redox flow batteries have the problem of capacity degradation with the increase in the number of charge/discharge cycles. Non-Patent Document 1 mentions a crossover phenomenon in which 2,5-DHBQ permeates the membrane due to the small molecular weight of 2,5-DHBQ as one of the factors for the capacity degradation.

In view of the above, an object of at least one embodiment of the present disclosure is to provide a redox flow battery whereby it is possible to suppress the capacity degradation with the increase in the number of charge/discharge cycles.

Solution to the Problems

To achieve the above object, a redox flow battery according to the present disclosure includes: a cell having a first chamber and a second chamber separated by a membrane; a first tank for storing a first electrolytic solution; a first circulation device for circulating the first electrolytic solution between the first chamber and the first tank; a second tank for storing a second electrolytic solution; and a second circulation device for circulating the second electrolytic solution between the second chamber and the second tank. Each of the first electrolytic solution and the second electrolytic solution contains an active material, and at least one of the active material contained in the first electrolytic solution or the active material contained in the second electrolytic solution is a quinone multimer in which a plurality of quinones are connected via an alkyl chain or a hydroquinone multimer in which a plurality of hydroquinones are connected via an alkyl chain.

Advantageous Effects

With the redox flow battery according to the present disclosure, the use of the quinone multimer or the hydroquinone multimer with larger molecular weight than the quinone or hydroquinone monomer as the active material can suppress the occurrence of crossover phenomenon compared to the use of the quinone or hydroquinone monomer as the active material, thereby suppressing the capacity degradation with the increase in the number of charge/discharge cycles.

BRIEF DESCRIPTION OF DRAWINGS

FIG. 1 is a schematic configuration diagram of a redox flow battery according to an embodiment of the present disclosure.
FIG. 2 is a graph showing a relationship between the number of quinone units in the quinone multimer and the diffusion coefficient.
FIG. 3 is a schematic configuration diagram of a redox flow battery according to another embodiment of the present disclosure.
FIG. 4 is a cyclic voltammogram of a hydroquinone pentamer prepared in Example 1.

DETAILED DESCRIPTION

Hereinafter, a redox flow battery according to embodiments of the present disclosure will be described with reference to the drawings. The following embodiments are illustrative and not intended to limit the present disclosure, and various modifications are possible within the scope of technical ideas of the present disclosure.

<Configuration of redox flow battery according to embodiment of present disclosure>

As shown in FIG. 1, a redox flow battery 1 according to an embodiment of the present disclosure includes a cell 2 having a first chamber 3 and a second chamber 4 separated by a membrane 5, a first tank 6 for storing a first electrolytic solution 12 containing an active material, a first pump 7, which is a first circulation device, for circulating the first electrolytic solution 12 between the first chamber 3 and the first tank 6, a second tank 8 for storing a second electrolytic solution 13 containing an active material, and a second pump 9, which is a second circulation device, for circulating the second electrolytic solution 13 between the second chamber 4 and the second tank 8.

The first tank 6 and the first pump 7 are disposed on a first electrolytic solution circulation path 10 having one end and the other end connected to the first chamber 3. The second tank 8 and the second pump 9 are disposed on a second electrolytic solution circulation path 11 having one end and the other end connected to the second chamber 4. In the first chamber 3, a first electrode 14 is disposed. In the second chamber 4, a second electrode 15 is disposed. Each of the first electrode 14 and the second electrode 15 is electrically connected to an AC/DC converter 16. The AC/DC converter 16 can be electrically connected to a load 17 and an AC power supply 18. If a DC power supply is used instead of the AC power supply 18, and the load 17 runs on DC current, the AC/DC converter 16 is not required.

<Active materials of first electrolytic solution and second electrolytic solution>

Each of the first electrolytic solution 12 and the second electrolytic solution 13 is a solution obtained by dissolving an active material in an aqueous solution containing a supporting electrolyte. The aqueous solution may be an alkaline aqueous solution in which potassium hydroxide, sodium hydroxide, or the like is dissolved, a neutral aqueous solution in which potassium chloride, sodium chloride, or the like is dissolved, or an acidic aqueous solution in which hydrogen chloride or sulfuric acid is dissolved. The active material dissolved in one of the first electrolytic solution 12 or the second electrolytic solution 13 may be a metal ion such as vanadium, a metal complex, air, halogen, or an organic molecule, but the active material dissolved in at least one of the first electrolytic solution 12 or the second electrolytic solution 13 (or both) is a quinone multimer or a hydroquinone multimer having a structure described below. A metal ion that precipitates during reduction, such as zinc, may be used.

The quinone multimer used in the redox flow battery 1 as the active material is composed of a plurality of quinones connected via an alkyl chain. Here, quinone is a substance represented by the following chemical formula (I) or (II). This quinone has a structure in which oxygen atoms are attached to two of the six carbon atoms constituting the six-membered ring by double bonds, and $R_1$ to $R_4$ are attached to the other four carbon atoms. $R_1$ to $R_4$ each may be hydrogen, a C1 to C6 alkyl group, a halogen, a hydroxy group, a C1 to C6 alkoxy group, a sulfone group, an amino

group, a nitro group, a carboxyl group, a phosphoric acid group, a thiol group, or any other functional group or element. Further, for example, in chemical formula (I), the terminal of $R_1$ and the terminal of $R_2$ may be connected to form a cyclic structure, or the terminal of $R_3$ and the terminal of $R_4$ may be connected to form a cyclic structure, that is, the quinone may have multiple cyclic structures. The quinone of chemical formula (II) may also have multiple cyclic structures.

[Chemical formula 1]

(I)

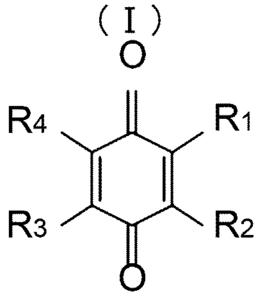

(II)

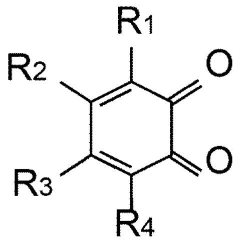

In the quinone multimer used in the redox flow battery 1 as the active material, one type or two or more types of two or more quinones are connected via an alkyl chain $R_5$ having one or more carbon atoms, as represented by the following chemical formula (III). In chemical formula (III), n is a natural number of 2 or more. $R_6$ and $R_7$ are connected to two carbon atoms, other than two carbon atoms to which oxygen atoms are connected by double bonds and two carbon atoms to which alkyl chains $R_5$ are connected, of carbon atoms constituting the six-membered ring. $R_6$ and $R_7$ can be selected from any functional group or element, as well as $R_1$ to $R_4$. Although the quinone multimer represented by chemical formula (III) is one in which two or more quinones represented by chemical formula (I) are connected, the quinone multimer may be one in which two or more quinones represented by chemical formula (II) are connected.

[Chemical formula 2]

(III)

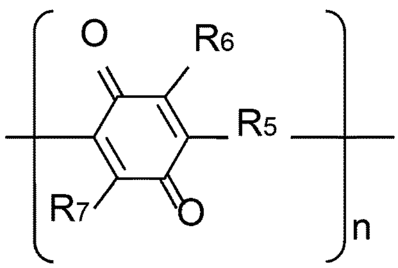

The quinone multimer represented by chemical formula (III) becomes a hydroquinone multimer through electron transfer and hydrogen atom transfer, as represented by the following reversible reaction formula (1). When supplied to the negative electrode-side chamber of the cell 2, the quinone multimer is used as an active material in a state where the battery is sufficiently discharged and needs to be charged (hereinafter referred to as "discharged state"), while the hydroquinone multimer is used as an active material in a state where the battery is fully charged and can be discharged (hereinafter referred to as a "charged state"). On the other hand, when supplied to the positive electrode-side chamber of the cell 2, the hydroquinone multimer is used as an active material in the discharged state, while the quinone multimer is used as an active material in the charged state. Regarding the quinone multimer and the hydroquinone multimer represented by reversible reaction formula (1), in the present disclosure, the hydroquinone multimer is referred to as "the hydroquinone multimer corresponding to the quinone multimer", and the quinone multimer is referred to as "the quinone multimer corresponding to the hydroquinone multimer".

[Chemical formula 3]

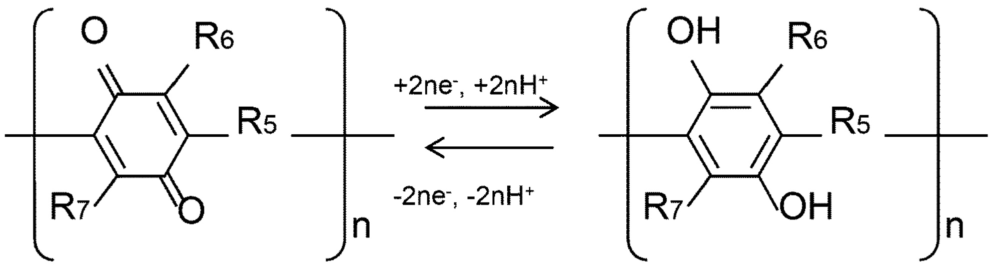

(1)

Two or more quinones constituting the quinone multimer do not have to be one type of quinones, but may be two types of quinones connected via alkyl chains $R_5$, as represented by the following chemical formula (IV), for example. $R_8$ and $R_9$ can be selected from any functional group or element, as well as $R_1$ to $R_7$. Although the following chemical formula (IV) seems to indicate that a chain of x first quinones with $R_6$ and $R_7$ attached to the six-membered ring is connected to a chain of y second quinones with $R_8$ and $R_9$ attached to the six-membered ring, the first quinones and the second quinones may be connected alternately, or in any order, or randomly. Three or more types of quinones may be connected via alkyl chains $R_5$. The alkyl chains $R_5$ are also not limited to one type, but may include multiple types of alkyl chains.

[Chemical formula 4]

(IV)

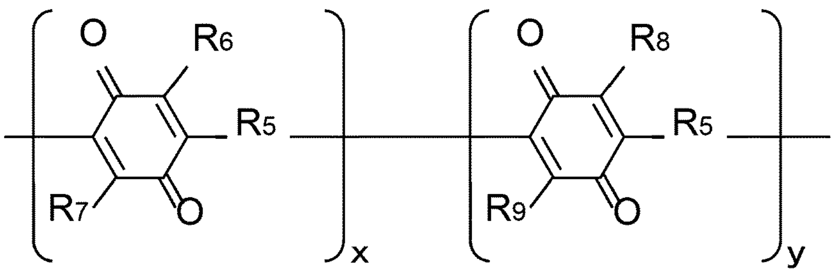

Further, the quinone multimer used in the redox flow battery 1 as the active material may be a pillar quinone in which (one type or two or more types of) quinones are connected in a ring shape via alkyl chains Rs, as represented by the following chemical formula (V).

[Chemical formula 5]

(V)

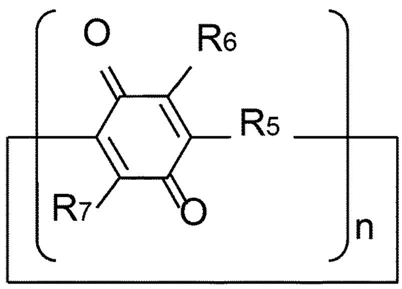

Examples of such a pillar quinone include a benzoquinone pentamer in which five benzoquinones are connected via methylene groups to form a ring. The following chemical formula (VI) shows a hydroquinone pentamer corresponding to the benzoquinone pentamer.

[Chemical formula 6]

(VI)

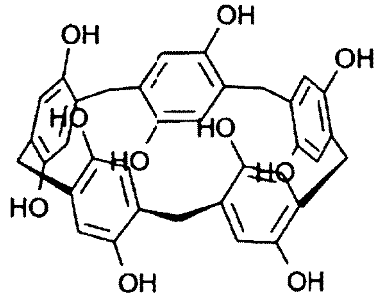

<Operation of redox flow battery according to embodiment of present disclosure>

Next, the operation of the redox flow battery 1 will be described with reference to FIG. 1. It is assumed that the quinone multimer represented by one of chemical formulas (III) to (V) or the hydroquinone multimer corresponding to this quinone multimer is dissolved in the first electrolytic solution 12 as the active material, while the active material dissolved in the second electrolytic solution 13 is a metal ion, a metal complex, a quinone multimer different from the quinone multimer dissolved in the first electrolytic solution 12, or a hydroquinone multimer corresponding to this quinone multimer.

When the redox flow battery 1 is in the charged state, assuming that the first chamber 3 is on the positive electrode side while the second chamber 4 is on the negative electrode side, the active material dissolved in the first electrolytic solution 12 is the quinone multimer. By operating the first pump 7, the first electrolytic solution 12 stored in the first tank 6 is supplied to the first chamber 3 through the first electrolytic solution circulation path 10. After the first chamber 3 is filled with the first electrolytic solution 12, the first electrolytic solution 12 flows out of the first chamber 3 and is returned to the first tank 6 through the first electrolytic solution circulation path 10. Thus, the first electrolytic solution circulates between the first chamber 3 and the first tank 6. On the other hand, by operating the second pump 9, the second electrolytic solution 13 circulates between the second chamber 4 and the second tank 8 by the same operation as described above.

In the first chamber 3, the forward reaction of reversible reaction formula (1) occurs, whereby the quinone multimer receives electrons from the first electrode 14 and is converted into the hydroquinone multimer. On the other hand, electrons move from the active material dissolved in the second electrolytic solution 13 to the second electrode 15 and flow into the AC/DC converter 16. That is, when the redox flow battery 1 is in the charged state, the first electrode 14 serves as the positive electrode and the second electrode 15 serves as the negative electrode to generate DC current. This DC current is converted into AC current by the AC/DC converter 16 and supplied to the load 17.

When the redox flow battery 1 is in the discharged state, the active material dissolved in the first electrolytic solution 12 is the hydroquinone multimer. AC current from the AC power supply 18 is converted into DC current by the AC/DC converter 16. In the first chamber 3, the reverse reaction of reversible reaction formula (1) occurs, whereby the hydroquinone multimer is converted to the quinone multimer, and electrons move from the hydroquinone multimer to the first electrode 14 and flow into the AC/DC converter 16. On the other hand, electrons from the AC/DC converter 16 flow to the second electrode 15 and are received by the active material dissolved in the second electrolytic solution 13.

<Effect of redox flow battery according to embodiment of present disclosure>

As described above, generally, redox flow batteries have the problem of capacity degradation with the increase in the number of charge/discharge cycles. Further, as described above, Non-Patent Document 1 mentions a crossover phenomenon in which the active material permeates the membrane as one of the factors for the capacity degradation. In Non-Patent Document 1, the quinone or hydroquinone monomer is used as the active material. In contrast, in the redox flow battery 1 of the present disclosure, the quinone multimer or the hydroquinone multimer is used as the active material dissolved in at least one of the first electrolytic solution 12 or the second electrolytic solution 13. Thus, the use of the quinone multimer or the hydroquinone multimer with larger molecular weight than the quinone or hydroquinone monomer as the active material can suppress the occurrence of crossover phenomenon compared to the use of the quinone or hydroquinone monomer as the active material, thereby suppressing the capacity degradation with the increase in the number of charge/discharge cycles.

When the quinone multimer or the hydroquinone multimer used as the active material has a structure in which a plurality of quinones are connected in a ring shape via alkyl chains (for example, chemical formula (V)) or a structure in which a plurality of hydroquinones are connected in a ring shape via alkyl chains (for example, chemical formula (VI)), due to the absence of ends of the active material molecule, quinone units or hydroquinone units that constitute the active material are equivalent, so that the entire active material molecule can be uniformly oxidized and reduced. Further, when the quinone multimer or the hydroquinone multimer containing two or more types of quinones or hydroquinones is used, by adjusting at least one of the type or proportion of the quinones or hydroquinones, the physical properties of the active material can be easily adjusted.

The quinone multimer or the hydroquinone multimer used in the redox flow battery 1 as the active material is composed of a plurality of quinones or hydroquinones connected via alkyl chains. In an active material with a plurality of quinones or hydroquinones connected directly to each other, the conjugation of each quinone or each hydroquinone spreads throughout the active material molecule, whereas in the active material with a plurality of quinones or hydroquinones connected via alkyl chains, the alkyl chains break up the conjugation of each quinone or each hydroquinone, and the conjugation does not spread throughout the active material molecule. In other words, in the former active material, the redox reaction of each quinone or each hydroquinone is affected by the redox state of other quinones or other hydroquinones due to conjugation spread over the entire molecule, whereas in the latter active material, the conjugation is broken and each quinone or each hydroquinone is electronically independent, so the redox reaction occurs evenly in each quinone or each hydroquinone. As a result, the battery performance is improved when the latter active material is used as compared to when the former active material is used.

In the case of the quinone multimers represented by chemical formulas (III) to (V), in each quinone, at least one of $R_6$ and $R_7$ ($R_8$ and $R_9$ as well) connected to carbon atoms, other than carbon atoms to which the alkyl chain $R_5$ is connected and carbon atoms to which the oxygen atoms are connected by the double bonds, of the carbon atoms constituting the six-membered ring to which the oxygen atoms are attached by the double bonds, is preferably not hydrogen but an element other than hydrogen or a functional group. In the case of the hydroquinone multimers corresponding to the quinone multimers represented by chemical formulas (III) to (V), in each hydroquinone, not hydrogen but an element other than hydrogen or a functional group is preferably connected to at least one carbon atom, other than carbon atoms to which the alkyl chain is connected and carbon atoms to which the hydroxy groups are connected, of the carbon atoms constituting the six-membered ring to which the hydroxy groups are attached.

As described above, the capacity of redox flow batteries tends to decrease with the increase in the number of charge/discharge cycles. In addition to the crossover phenomenon, decomposition of the active material due to charge/discharge and heat is thought to be the cause of this tendency. It is considered that the decomposition of quinones proceed by the reaction of carbon constituting the ring structure of each quinone, other than carbon atoms to which alkyl chains and oxygen atoms are attached, with nucleophiles ($OH^-$) in the electrolytic solution. As described above, if each of $R_6$ and $R_7$ ($R_8$ and $R_9$ as well) is an element other than hydrogen or a functional group, the reaction with the nucleophiles ($OH^-$) in the electrolytic solution is suppressed, and thus the decomposition of the active material can be suppressed. The same applies to suppression of the decomposition of hydroquinones.

As described above, although the crossover phenomenon can be suppressed by increasing the molecular weight through polymerization of quinones or hydroquinones, if the molecular weight of the active material is too large, the resistance may increase due to blockage of the membrane ion channel by adhesion of the active material or decrease in diffusion coefficient of the active material, and thus the current density may decrease. In order to suppress such a decrease in current density, it is considered necessary to specify an upper limit for the molecular weight of the active material, that is, the number of units of quinones or hydroquinones contained in the active material. However, in order to specify the upper limit of the number of units, the relationship between the number of units and the diffusion coefficient is necessary. Therefore, the relationship between the number of units and the diffusion coefficient will be examined below.

Publicly Known Document 1 (T. Janoschka, et al., "An aqueous, polymer-based redox-flow battery using non-corrosive, safe, and low-cost materials", Nature vol. 527, p78-81, 5, Nov., 2015), which was already known prior to the filing of this disclosure, shows an example of the redox flow battery using a polymerized redox active molecule as the active material, and the diffusion coefficient of this active material is $(7.0\pm0.5)\times10^{-8}$ $cm^2$/sec. This suggests that the use of a molecule with a diffusion coefficient of at least $1\times10^{-7}$ $cm^2$/sec as the active material can suppress the decrease in current density in the redox flow battery.

The diffusion coefficient can be calculated from the particle radius (molecular radius) by using the Stokes-Einstein equation (A) in Publicly Known Document 2 (J. T. Edward, "Molecular Volumes and the Stokes-Einstein Equation", J. Chem. Edu., vol. 47(4), p261-270, Apr., 1970), which was already known prior to the filing of this disclosure:

$$D = kT/(n\pi\eta r) \qquad (A)$$

where D is the diffusion coefficient, k is the Boltzmann constant, T is the absolute temperature, n is an empirical value,

η is the viscosity of solvent, and r is the particle radius (molecular radius).

In Publicly Known Document 2, radius based on van der Waals volume is used as the particle radius (molecular radius) r. Using the method of calculating van der Waals volume disclosed in Publicly Known Document 2, the molecular radius r of each quinone unit in the benzoquinone pentamer composed of five benzoquinones connected in a ring shape via methylene groups was calculated. Table 1 below summarizes the volume increase of each structure (divided structure) obtained by dividing the structure of each quinone and the number of divided structures, and by adding them together, the molecular volume r of the quinone unit = 99.6 cubic angstroms was obtained.

(Table 1)

| Divided structure | Volume increase (Å$^3$) | Number | Total increase (Å$^3$) | Quinone unit |
|---|---|---|---|---|
| 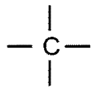 | 5.6 | 1 | 5.6 | 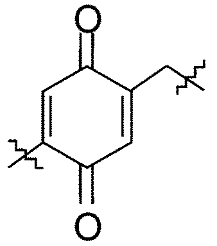 |
| >C= | 8.1 | 6 | 48.6 | |
| -H connected to C | 5.7 | 4 | 22.8 | |
| =O | 11.3 | 2 | 22.6 | |
| | | Total | 99.6 | |

In using the Stokes-Einstein equation (A), the molecular radius r of the quinone unit was calculated from van der Waals volume assuming that the quinone unit is perfect spherical, and the relationship between the number of quinone units and the diffusion coefficient was calculated in the range of 2 to 1,000 quinone units, using the viscosity of water at 25°C as the viscosity of solvent, temperature of 298 K, and empirical value n of 6. The results are shown in FIG. 2.

According to Publicly Known Document 3 (B. Yang et al., "An Inexpensive Aqueous Flow Battery for Large-Scale Electrical Energy Storage Based on Water-Soluble Organic Redox Couples", J. Electrochemical Society, 161(9) A1371-A1380, 2014), in a system using water as a solvent, the diffusion coefficient is reduced by about an order of magnitude due to hydrogen bonding. Therefore, in FIG. 2, in addition to the relationship (solid line) calculated using the Stokes-Einstein equation (A), the relationship (dashed line) obtained by multiplying this relationship (solid line) by 0.1 is also shown.

In the relationship between the number of quinone units and the diffusion coefficient obtained in this way, the relationship shown by the dashed line indicates that the upper limit of the number of quinone units with a diffusion coefficient of $1 \times 10^{-7}$ $cm^2$/sec or more is about 600. With this method, for example, in the quinone multimer represented by chemical formula (III), the upper limit of the number of quinone units can be specified even if the alkyl chain $R_5$ is changed, or the substituents $R_6$ and $R_7$ (Rs and $R_9$ as well) are changed.

By using a methylene group with the smallest molecular weight as the alkyl chain Rs, it is possible to prevent the diffusion coefficient from excessively decreasing due to increasing the molecular weight more than necessary when the number of quinone units contained in the active material is increased.

<Modification of redox flow battery according to another embodiment of present disclosure>

As shown in FIG. 3, the redox flow battery 1 according to another embodiment of the present disclosure may include an inert gas supply part 20 for supplying an inert gas to each of the first tank 6 and the second tank 8. The inert gas supply part 20 includes an inert gas supply source 21, inert gas supply paths 22, 23 having one end connected to the supply source 21 and the other end connected to the first tank 6 and the second tank 8, respectively, and compressors 24, 25 disposed on the inert gas supply paths 22, 23, respectively. Here, nitrogen or a rare gas such as argon may be used as the inert gas. When compressed gas is used as the supply source 21 of the inert gas, the compressors 24, 25 can be eliminated.

The inert gas may be supplied to each of the first tank 6 and the second tank 8 at any timing, and the inert gas may be supplied continuously or intermittently. In particular, it is preferable to supply the inert gas before starting the operation of the redox flow battery 1. Further, the inert gas may be supplied in the form of bubbling into the first electrolytic solution 12 and the second electrolytic solution 13, or may be supplied into the gas phase in the first tank 6 and the second tank 8.

By supplying the inert gas to each of the first tank 6 and the second tank 8, the active materials in the first electrolytic solution 12 and the second electrolytic solution 13 come into contact with oxygen, reducing the risk of unintended oxidation and side reactions. In FIG. 3, the inert gas is supplied to each of the first tank 6 and the second

tank 8, but the inert gas may be supplied to only one of the first tank 6 or the second tank 8. With respect to this embodiment, if the active material of either one of the first electrolytic solution 12 or the second electrolytic solution 13 is the quinone multimer or the hydroquinone multimer, it is preferable to supply the inert gas to the tank that stores the one electrolytic solution.

Examples

(First Embodiment)

The following is an example of producing the hydroquinone pentamer represented by chemical formula (VI). 13.8 g of 1,4-dimethoxybenzene and 9.3 g of paraformaldehyde were dissolved in 200 ml of 1,2-dichloroethane, 12.5 ml of boron trifluoride-diethyl ether complex was added dropwise thereto, and the mixture was stirred at room temperature for 30 minutes. The reaction solution was diluted with 1 L of methanol, and the precipitate was filtered to obtain a crude product. This solid was washed with chloroform-acetone (80 ml: 80 ml), whereby 17.6 g of cyclic pentamer was obtained. The yield (117%) exceeded the theoretical value due to contamination of the washing solvent, but it was used as such for the next reaction. 8.8 g of the cyclic pentamer was dissolved in 375 ml of chloroform, and 210 ml of a methylene chloride solution of boron tribromide at a concentration of 1 mol/L was added to conduct reaction. The reaction solution was poured into ice water to stop the reaction, and the precipitated solid was filtered and washed with 0.5N hydrochloric acid, acetone, and chloroform. At this time, a pale brown solid precipitated from the acetone and chloroform washing solution, which was filtered to obtain 1.65 g of the hydroquinone pentamer. The yield was 27%

A cyclic voltammogram of the hydroquinone pentamer thus obtained was obtained. The measurement was made using a 5-mm diameter glassy carbon as the working electrode, Ag/AgCl (3M sodium chloride solution) as the reference electrode, and platinum wire as the counter electrode at a sweep rate of 25 mV/sec. The results are shown in FIG. 4. As a result, the redox potential of the hydroquinone pentamer was -0.75 (V vs. SHE), and the solubility of the hydroquinone pentamer was 1.8 M per hydroquinone unit, which indicates that it is sufficient as the active material for the redox flow battery.

The contents described in the above embodiments would be understood as follows, for instance.

[1] A redox flow battery according to one aspect includes: a cell (2) having a first chamber (3) and a second chamber (4) separated by a membrane (5); a first tank (6) for storing a first electrolytic solution (12); a first circulation device (first pump 7) for circulating the first electrolytic solution (12) between the first chamber (3) and the first tank (6); a second tank (8) for storing a second electrolytic solution (13); and a second circulation device (second pump 9) for circulating the second electrolytic solution (13) between the second chamber (4) and the second tank (8). Each of the first electrolytic solution (12) and the second electrolytic solution (13) contains an active material, and at least one of the active material contained in the first electrolytic solution (12) or the active material contained in the second electrolytic solution (13) is a quinone multimer in which a plurality of quinones are connected via an alkyl chain or a hydroquinone multimer in which a plurality of hydroquinones are connected via an alkyl chain.

With the redox flow battery according to the present disclosure, the use of the quinone multimer or the hydroquinone multimer with larger molecular weight than the quinone or hydroquinone monomer as the active material can suppress the occurrence of crossover phenomenon compared to the use of the quinone or hydroquinone monomer as the active material, thereby suppressing the capacity degradation with the increase in the number of charge/discharge cycles.

[2] A redox flow battery according to another aspect is the redox flow battery as defined in [1], where the active material has a structure in which a plurality of quinones are connected in a ring shape via the alkyl chain or a structure in which a plurality of hydroquinones are connected in a ring shape via the alkyl chain.

With the above configuration, due to the absence of ends of the active material molecule, quinone units or hydroquinone units that constitute the active material are equivalent, so that the entire active material molecule can be uniformly oxidized and reduced.

[3] A redox flow battery according to still another aspect is the redox flow battery as defined in [1] or [2], where a diffusion coefficient of the quinone multimer or the hydroquinone multimer is $1\times10^{-7}$ $cm^2$/sec or more.

Although the crossover phenomenon can be suppressed by increasing the molecular weight through polymerization of quinones or hydroquinones, if the molecular weight of the active material is too large, the resistance may increase due to blockage of the membrane ion channel by adhesion of the active material or decrease in diffusion coefficient of the active material, and thus the current density may decrease. In contrast, with the above configuration [3], by setting the upper limit on the molecular volume so that the diffusion coefficient of the active material is $1\times10^{-7}$ $cm^2$/sec or more, the increase in resistance due to the blockage of the membrane ion channel or decrease in diffusion coefficient can be suppressed, so that the decrease in current density can be suppressed.

[4] A redox flow battery according to still another aspect is the redox flow battery as defined in any one of [1] to [3], where each quinone constituting the quinone multimer contains a six-membered ring to which oxygen atoms are connected by double bonds, and an element other than hydrogen or a functional group is connected to at least one carbon atom, other than carbon atoms to which the alkyl chain is connected and carbon atoms to which the oxygen atoms are connected by the double bonds, of carbon atoms constituting the six-membered ring.

The decomposition of the active material due to charge/discharge and heat is thought to be the other cause of the capacity degradation with the increase in the number of charge/discharge cycles. It is considered that the decomposition of quinones proceed by the reaction of carbon constituting the ring six-membered ring of each quinone, other than carbon atoms to which alkyl chains are attached and carbon atoms to which oxygen atoms are attached by double bonds, with nucleophiles ($OH^-$) in the electrolytic solution. In contrast, with the above configuration [4], the reaction with the nucleophiles ($OH^-$) in the electrolytic solution is suppressed, and thus the decomposition of the active material can be suppressed.

[5] A redox flow battery according to still another aspect is the redox flow battery as defined in any one of [1] to [3], where each hydroquinone constituting the hydroquinone multimer contains a six-membered ring to which hydroxy groups are connected, and an element other than hydrogen or a functional group is connected to at least one carbon atom, other than carbon atoms to which the alkyl chain is connected and carbon atoms to which the hydroxy groups are connected, of carbon atoms constituting the six-membered ring.

The decomposition of the active material due to charge/discharge and heat is thought to be the other cause of the capacity degradation with the increase in the number of charge/discharge cycles. It is considered that the decomposition of hydroquinones proceed by the reaction of carbon constituting the ring six-membered ring of each hydroquinone, other than carbon atoms to which alkyl chains are attached and carbon atoms to which hydroxy groups are attached, with nucleophiles ($OH^-$) in the electrolytic solution. In contrast, with the above configuration [5], the reaction with the nucleophiles ($OH^-$) in the electrolytic solution is suppressed, and thus the decomposition of the active material can be suppressed.

[6] A redox flow battery according to still another aspect is the redox flow battery as defined in any one of [1] to [5], where the quinone multimer or the hydroquinone multimer contains at least two types of quinones or at least two types of hydroquinones.

With this configuration, since the quinone multimer or the hydroquinone multimer contains at least two types of quinones or at least two types of hydroquinones, the physical properties of the quinone multimer or the hydroquinone multimer can be easily adjusted.

[7] A redox flow battery according to still another aspect is the redox flow battery as defined in any one of [1] to [6], where the alkyl chain is a methylene group.

In an active material with a plurality of quinones or hydroquinones connected directly to each other, the conjugation of each quinone or each hydroquinone spreads throughout the active material molecule, whereas in the active material with a plurality of quinones or hydroquinones connected via alkyl chains, the alkyl chains break up the conjugation of each quinone or each hydroquinone, and the conjugation does not spread throughout the active material molecule. In the former active material, the redox reaction of each quinone or each hydroquinone is affected by the redox state of other quinones or other hydroquinones due to conjugation spread over the entire molecule, whereas in the latter active material, the conjugation is broken, so the redox reaction occurs evenly in each quinone or each hydroquinone. As a result, the battery performance is improved when the latter active material is used as compared to when the former active material is used. With the above configuration [6], since the alkyl chain that plays this role is a methylene group with the smallest molecular weight, it is possible to prevent the diffusion coefficient from excessively decreasing due to increasing the molecular weight more than necessary when the number of quinone units or hydroquinones contained in the active material is increased.

[8] A redox flow battery according to still another aspect is the redox flow battery as defined in any one of [1] to [7] further comprises an inert gas supply part (20) for supplying an inert gas to at least one of the first tank (6) or the second tank (8).

With this configuration, unintended oxidation and side reactions of the active material due to contact with oxygen can be suppressed.

Reference Signs List

1 Redox flow battery
2 Cell
3 First chamber
4 Second chamber

5 Membrane
6 First tank
7 First pump (First circulation device)
8 Second tank
9 Second pump (Second circulation device)
12 First electrolytic solution
13 Second electrolytic solution
20 Inert gas supply part

## Claims

**1.** A redox flow battery, comprising:

a cell having a first chamber and a second chamber separated by a membrane;
a first tank for storing a first electrolytic solution;
a first circulation device for circulating the first electrolytic solution between the first chamber and the first tank;
a second tank for storing a second electrolytic solution; and
a second circulation device for circulating the second electrolytic solution between the second chamber and the second tank,
wherein each of the first electrolytic solution and the second electrolytic solution contains an active material, and at least one of the active material contained in the first electrolytic solution or the active material contained in the second electrolytic solution is a quinone multimer in which a plurality of quinones are connected via an alkyl chain or a hydroquinone multimer in which a plurality of hydroquinones are connected an alkyl chain.

**2.** The redox flow battery according to claim 1,
wherein the active material has a structure in which a plurality of quinones are connected in a ring shape via the alkyl chain or a structure in which a plurality of hydroquinones are connected in a ring shape via the alkyl chain.

**3.** The redox flow battery according to claim 1 or 2,
wherein a diffusion coefficient of the quinone multimer or the hydroquinone multimer is $1 \times 10^{-7}$ $cm^2$/sec or more.

**4.** The redox flow battery according to any one of claims 1 to 3,
wherein each quinone constituting the quinone multimer contains a six-membered ring to which oxygen atoms are connected by double bonds, and
wherein an element other than hydrogen or a functional group is connected to at least one carbon atom, other than carbon atoms to which the alkyl chain is connected and carbon atoms to which the oxygen atoms are connected by the double bonds, of carbon atoms constituting the six-membered ring.

**5.** The redox flow battery according to any one of claims 1 to 3,

wherein each hydroquinone constituting the hydroquinone multimer contains a six-membered ring to which hydroxy groups are connected, and
wherein an element other than hydrogen or a functional group is connected to at least one carbon atom, other than carbon atoms to which the alkyl chain is connected and carbon atoms to which the hydroxy groups are connected, of carbon atoms constituting the six-membered ring.

**6.** The redox flow battery according to any one of claims 1 to 5,
wherein the quinone multimer or the hydroquinone multimer contains at least two types of quinones or at least two types of hydroquinones.

**7.** The redox flow battery according to any one of claims 1 to 6,
wherein the alkyl chain is a methylene group.

**8.** The redox flow battery according to any one of claims 1 to 7, further comprising an inert gas supply part for supplying an inert gas to at least one of the first tank or the second tank.

FIG. 1

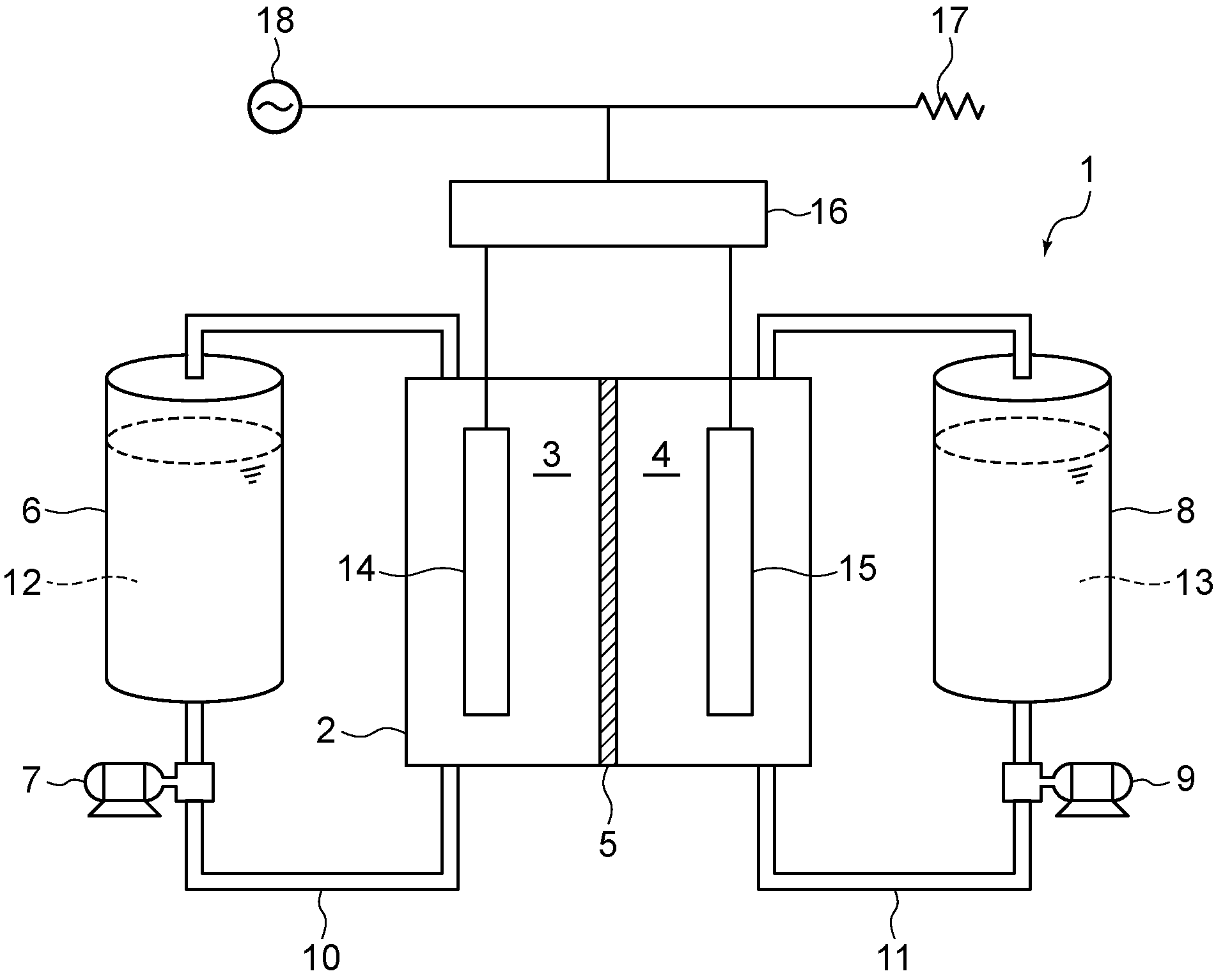

FIG. 2

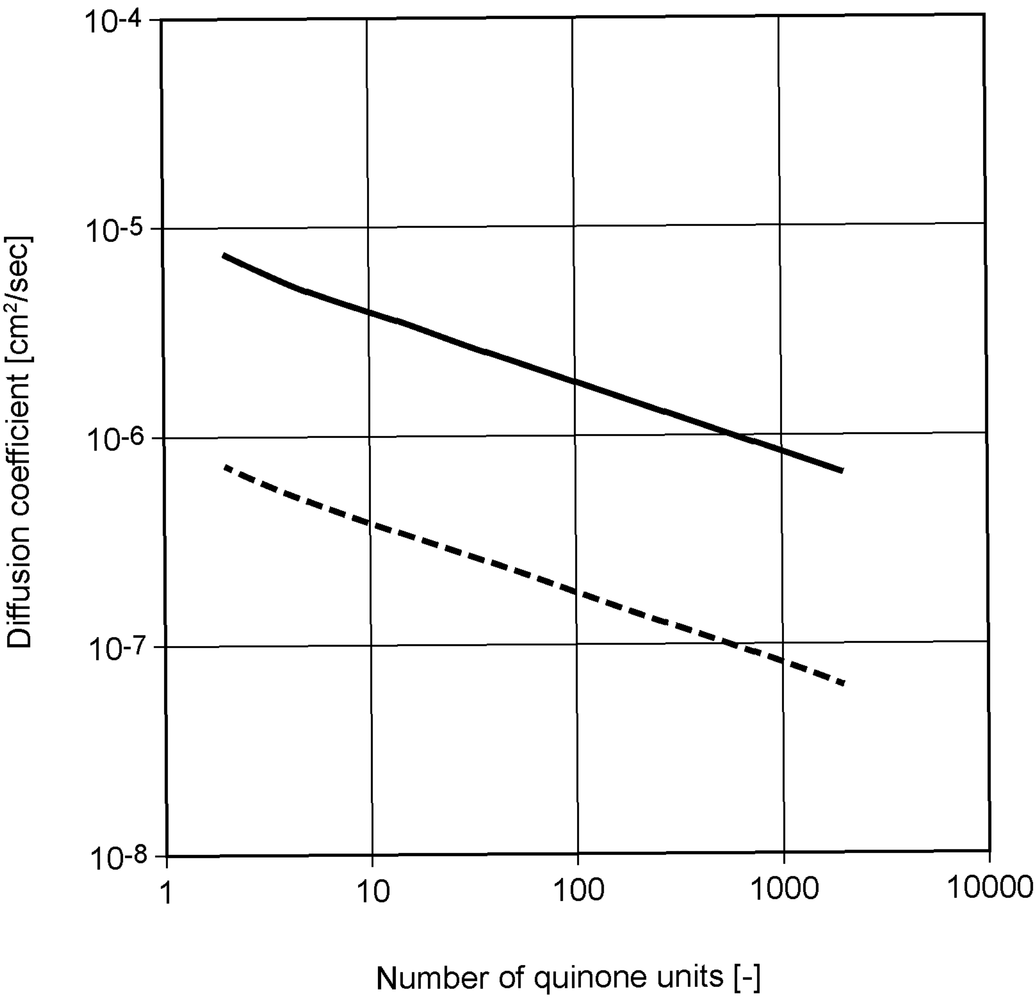
10-4
10-5
10-6
10-7
10-8
Diffusion coefficient [cm2/sec]
1
10
100
1000
10000
Number of quinone units [-]

FIG. 3

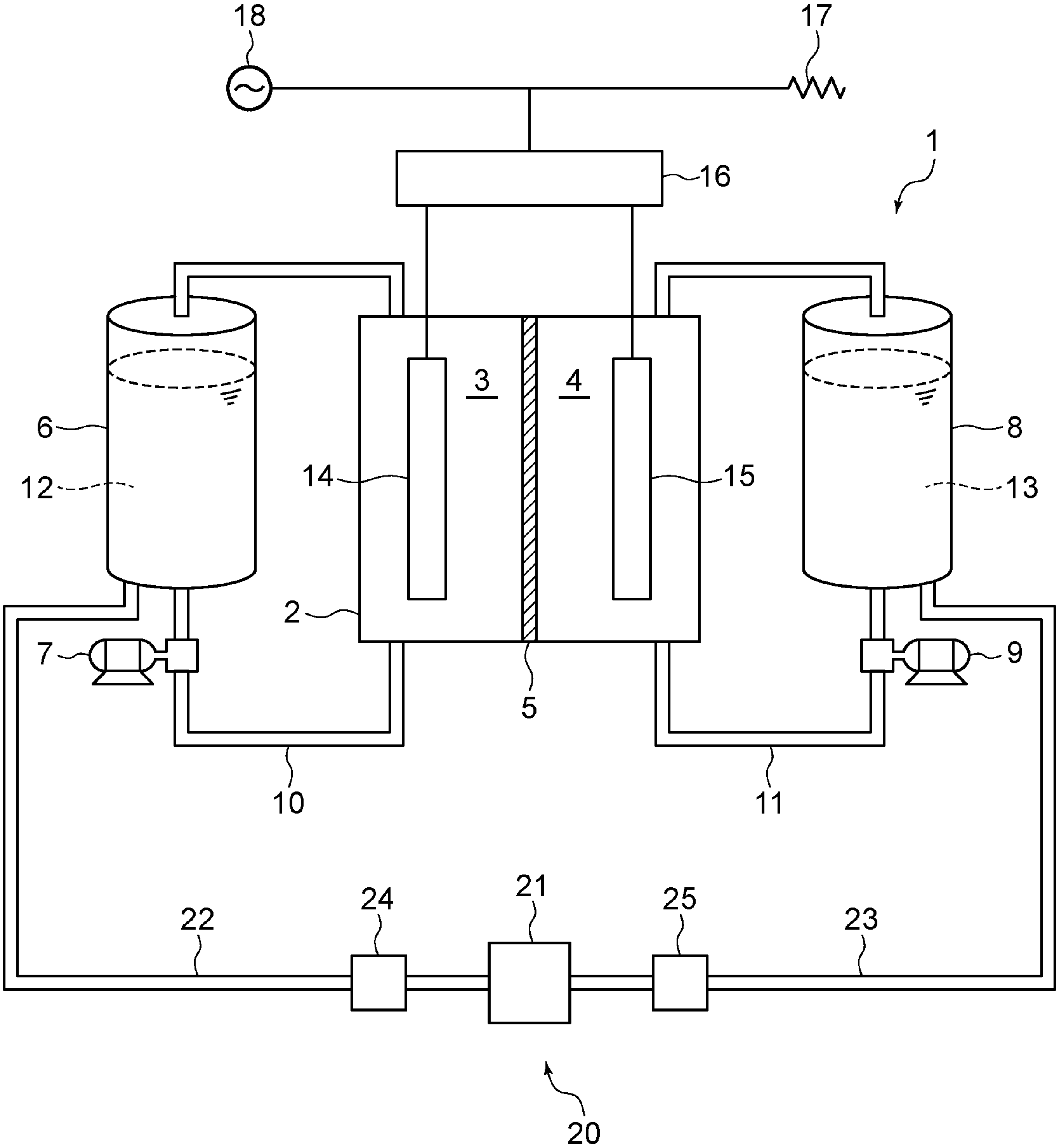

FIG. 4

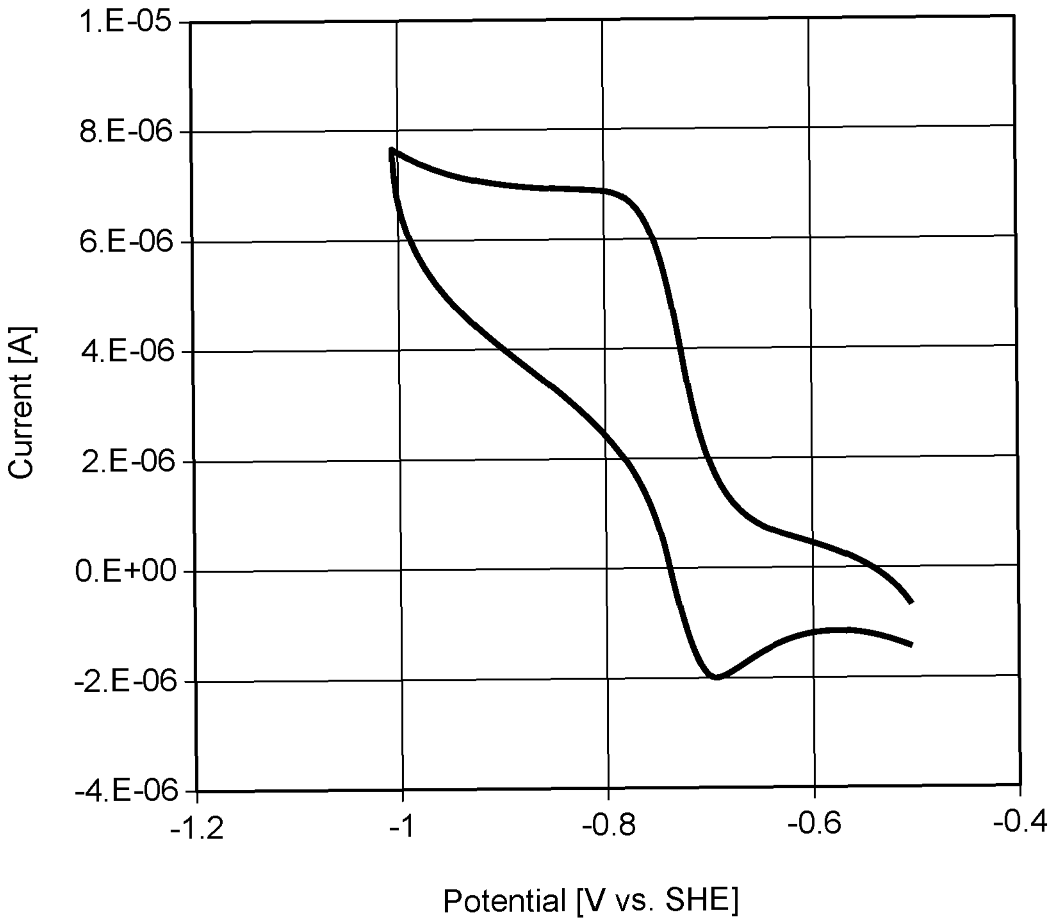
1.E-05
8.E-06
6.E-06
4.E-06
2.E-06
0.E+00
-2.E-06
-4.E-06
Current [A]
-1.2
-1
-0.8
-0.6
-0.4
Potential [V vs. SHE]

**INTERNATIONAL SEARCH REPORT**

International application No. PCT/JP2021/020990

A. CLASSIFICATION OF SUBJECT MATTER
H01M 8/02(2016.01)i; H01M 8/04(2016.01)i; H01M 8/18(2006.01)i
FI: H01M8/18; H01M8/02; H01M8/04 J

According to International Patent Classification (IPC) or to both national classification and IPC

B. FIELDS SEARCHED

Minimum documentation searched (classification system followed by classification symbols)
H01M8/02; H01M8/04; H01M8/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2017-514930 A (EVONIK DEGUSSA GMBH) 08 June 2017 (2017-06-08) paragraphs [0001]-[0019], [0091] | 1-8 |
| A | CN 107482242 A (CHANGZHOU UNIVERSITY) 15 December 2017 (2017-12-15) claims 1, 2, paragraph [0018] | 1-8 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 August 2021 (06.08.2021) | 17 August 2021 (17.08.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/020990

| Patent Documents referred in the Report | Publication Date | Patent Family | Publication Date |
|---|---|---|---|
| JP 2017-514930 A | 08 Jun. 2017 | US 2017/0114162 A1<br>paragraphs [0001]-[0022], [0119]<br>CA 2941506 A1<br>DE 102014003300 A1<br>CN 106062031 A<br>KR 10-2016-0130384 A<br>WO 2015/132374 A1 | |
| CN 107482242 A | 15 Dec. 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020108615 A
- JP 2015534708 W

### Non-patent literature cited in the description


- **Z. YANG et al.** Alkaline Benzoquinone Aqueous Flow Battery for Large-Scale Storage of Electrical Energy. *Advanced. Energy Materials,* 2017
- **T. JANOSCHKA et al.** An aqueous, polymer-based redox-flow battery using non-corrosive, safe, and low-cost materials. *Nature,* 05 November 2015, vol. 527, 78-81
- **J. T. EDWARD.** Molecular Volumes and the Stokes-Einstein Equation. *J. Chem. Edu.,* April 1970, vol. 47 (4), 261-270
- **B. YANG et al.** An Inexpensive Aqueous Flow Battery for Large-Scale Electrical Energy Storage Based on Water-Soluble Organic Redox Couples. *J. Electrochemical Society,* 2014, vol. 161 (9), A1371-A1380